# EUROPÄISCHE PATENTSCHRIFT

(11) **EP 2 146 791 B1**
(45) Veröffentlichungstag und Bekanntmachung des Hinweises auf die Patenterteilung: **13.06.2018**
(21) Anmeldenummer: 08749889.5
(22) Anmeldetag: 30.04.2008
(51) Int. Cl.: C01C 1/08, B01B 1/00

(54) **VERDAMPFERVORRICHTUNG ZUR MOBILEN AMMONIAKGAS-ERZEUGUNG UND VERFAHREN ZUR HERSTELLUNG EINER SOLCHEN**
EVAPORATOR FOR MOBILE ANHYDROUS AMMONIA PRODUCTION, AND METHOD FOR MANUFACTURING SUCH AN EVAPORATOR
DISPOSITIF D'ÉVAPORATION POUR LA PRODUCTION DE GAZ AMMONIAC MOBILE, ET PROCÉDÉ DE PRODUCTION D'UN TEL DISPOSITIF

(30) Priorität: 16.05.2007 DE 102007023424; 04.12.2007 DE 102007058486
(43) Veröffentlichungstag der Anmeldung: 27.01.2010
(73) Patentinhaber: Continental Automotive GmbH, 30165 Hannover (DE)
(72) Erfinder: HIRTH, Peter, 51503 Rösrath (DE); BRUGGER, Marc, 53819 Neunkirchen (DE); HÄRIG, Thomas, 53819 Neunkirchen-Seelscheid (DE); BRÜCK, Rolf, 51429 Bergisch Gladbach (DE); VORSMANN, Christian, 51105 Köln (DE)
(86) Internationale Anmeldenummer: PCT/EP2008/055293
(87) Internationale Veröffentlichungsnummer: WO 2008/138756

(56) Entgegenhaltungen:
- WO-A-2006/132132
- DE-A1-102005 023 956
- DE-A1-102006 023 148
- US-A1- 2003 188 855
- US-A1- 2004 148 859

## Beschreibung

Die vorliegende Erfindung betrifft eine Verdampfervorrichtung umfassend einen Grundkörper mit zumindest einer Zuleitung und zumindest einer Ableitung, in dem wenigstens ein Heizelement und wenigstens ein Kanal zur Verbindung der Zuleitung mit der Ableitung vorgesehen sind und ein Verfahren zur Herstellung einer Verdampfervorrichtung. Eine solche Verdampfervorrichtung soll insbesondere dazu eingesetzt werden, eine wässrige Harnstoff-Lösung zu erhitzen bzw. zu überhitzen, um auf diese Weise schließlich Ammoniakgas zu erzeugen, das einem Abgassystem eines Kraftfahrzeugs zugegeben werden kann, um Schadstoffe des Abgases zu konvertieren.

Insbesondere bei Dieselverbrennungsmaschinen hat es sich bewährt, dem von der Verbrennungskraftmaschine erzeugten Abgas Harnstoff in wässriger Lösung direkt oder nach einer externen Hydrolyse Ammoniak zuzugeben. Hierbei kommt bei bekannten Verfahren ein Hydrolyse-Katalysator zum Einsatz, an dem aus dem Harnstoff Ammoniak gewonnen wird. Die wässrige Harnstofflösung wird stromauf des Hydrolyse-Katalysators zugegeben, in gasförmigen Zustand überführt und mit dem Hydrolyse-Katalysator in Kontakt gebracht. Der dabei generierte Ammoniak reagiert dann beispielsweise mit einem so genannten SCR-Katalysator weiter stromabwärts im Abgasstrom mit den dort enthaltenen Stickoxiden zu molekularen Stickstoff und Wasser.

Bei der Verdampfung der wässrigen Harnstofflösung ist die Temperaturführung besonders schwierig. Dies ist gerade unter dem Aspekt zu berücksichtigen, dass die benötigten Mengen der Harnstofflösung einerseits und die verfügbaren Temperaturen andererseits während einer mobilen Anwendung stark variieren können. Wird eine Verdampfung nicht vollständig erreicht, können sich Zwischenprodukte Wird eine Verdampfung nicht vollständig erreicht, können sich Zwischenprodukte bilden, die gegebenenfalls zur Verstopfung der Verdampfereinheit führen können. Derartige, unerwünschte, Nebenprodukte sind beispielsweise wasserunlösliches Biuret, das sich aus Isocyansäure und Harnstoff bildet, und Cyanursäure, welche das Trimerisierungsprodukt der Isocyansäure darstellt.

Die DE 10 2005 023 956 A1 offenbart einen Verdampfer, der im Wesentlichen aus zwei konzentrisch ineinander liegenden, zylindrischen oder konusförmigen Rohrstücken gebildet ist. Die Verdampfung erfolgt in einem Spalt, der durch die konzentrisch angeordneten Rohre gebildet wird. Die Kanäle sind in die Innen- oder Außenwände der Rohrstücke eingearbeitet. Der Spalt wird nach außen durch eine Dichtung abgedichtet.

Die US 2004/148859 A1 offenbart einen chemischen Reaktor, in dem ein mäanderförmigen Kanal in einem Substrat eingearbeitet ist. Der Kanal wird von einem zweiten Substrat mit ebener Oberfläche abgedeckt. Zwischen den Substraten, in der Trennebene, ist eine dünne Heizfolie angeordnet, die unmittelbar von dem durch den Kanal strömenden Fluid kontaktiert wird. Damit ist eine direkte Wärmezufuhr zu dem Fluid möglich.

Aus der WO 2006/132132 A ist ein chemischer Reaktor bekannt, in dem mäanderförmige Reaktionskanäle in metallischen Platten eingearbeitet sind. Die Platten werden übereinander angeordnet, so dass eine ebene Seite der einen Platte den auf der anderen Platte eingearbeiteten, nach oben offenen Kanal abdeckt und so eine Leitung gebildet ist.

Die US 2003/188855 A1 offenbart einen Wärmetauscher, in dem ein Treibstoff verdampft wird. Der Wärmetauscher kann durch einen Wabenkörper gebildet werden, der quer zueinander verlaufende Kanäle aufweist. Die Kanäle werden durch glatte und gewellte Folien gebildet.

Aus der DE 10 2006 023 148 A1 ist eine Vorrichtung zur Aufbereitung von Abgas bekannt. Ein Kanal für eine wässrige Lösung ist in die äußere Umfanasfläche eines Mantelrohres eingearbeitet, dass ein stabförmiges Heizelement umgibt. Eine Hülse wird auf dem Mantelrohr angeordnet, so dass mit dem Kanal eine Leitung gebildet ist.

Hiervon ausgehend ist es Aufgabe der vorliegenden Erfindung, eine Verdampfervorrichtung anzugeben, die die vorstehend genannten Probleme zumindest teilweise löst. Insbesondere soll eine Verdampfervorrichtung angegeben werden, die kompakt aufgebaut ist und auch bei hochdynamischen Temperaturlastwechseln die Förderung bzw. Generierung von Ammoniakgas mit einer vorgegeben Genauigkeit und Vollständigkeit gewährleistet. Weiterhin soll ein entsprechendes Verfahren zur Herstellung einer Verdampfervorrichtung angegeben werden.

Diese Aufgaben werden gelöst mit einer Verdampfervorrichtung gemäß den Merkmalen des Patentanspruchs 1 und einem Verfahren mit den Merkmalen des Patentanspruchs 12. Weitere vorteilhafte Ausgestaltungen der Erfindung sind in den jeweils abhängig formulierten Patentansprüchen angegeben, Es ist darauf hinzuweisen, dass die in den Patentansprüchen einzeln aufgeführten Merkmale, in beliebiger, technologisch sinnvoller, Weise miteinander kombiniert werden können, und weitere Ausgestaltungen der Erfindung aufzeigen. Die Beschreibung, insbesondere im Zusammenhang mit den Figuren, veranschaulicht weitere Ausführungsbeispiele der Erfindung.

Die erfindungsgemäße Verdampfervorrichtung umfasst einen Grundkörper mit zumindest einer Zuleitung und zumindest einer Ableitung, in dem wenigstens ein Heizelement und wenigstens ein Kanal zur Verbindung der Zuleitung und der Ableitung vorgesehen ist, wobei das wenigstens eine Heizelement mit einem Verdampfungsabschnitt des wenigstens einen Kanals in wärmeleitendem Kontakt ist und der wenigstens eine Kanal in diesem Verdampfungsabschnitt einen mäanderförmigen Verlauf aufweist.

Der Grundkörper stellt insbesondere ein massives Bauteil (z.B. sind Wandbereiche sind deutlich dicker als der Kanalquerschnitt) dar, während die Zuleitung und/oder die Ableitung bevorzugt ein formstabiles, rohrähnliches separates Bauteil ist. Insoweit kann beispielsweise entlang einer gemeinsamen Längsachse eine Zuleitung über einen Anschluss an den Grundkörper fixiert werden, in dem dann der Kanal ausgebildet ist, wobei auf der gegenüberliegenden Seite des Grundkörpers die Ableitung ebenfalls an einem Anschluss fixiert ist.

Durch diesen Grundkörper hindurch erstreckt sich nun der Kanal. Zur energetisch besonders günstigen Einbringung der zur Verdampfung einzubringenden thermischen Energie ist mindestens ein Heizelement so in bzw. an dem Grundkörper positioniert (bevorzugt sind mehrere, im Grundkörper gleichmäßig verteilt integrierte Heizelemente), dass die damit generierte Wärme auf die Kanalwand zumindest im hier so genannten Verdampfungsabschnitt eingeleitet werden kann.

Zudem wird hier vorgeschlagen, dass der (bevorzugt nur) eine Kanal im Verdampfungsabschnitt einen mäanderförmigen Verlauf hat. Damit ist insbesondere gemeint, dass sich der Kanal im Verdampfungsabschnitt nicht geradlinig (z.B. entlang der Längsachse) erstreckt, sondern bevorzugt eine Vielzahl von Schlingen, Schleifen, Wendungen oder dergleichen aufweist. Es wurde herausgefunden, dass gerade ein solcher mäanderförmiger Verlauf zwei positive Effekte zur Folge hat: zum Einen kann so über eine relativ kleine Erstreckung des Grundkörpers eine große Kanallänge ausgebildet werden, so dass eine ausreichende Verdampfungsstrecke bei einer sehr kompakten Ausgestaltung des Grundkörpers realisierbar ist. Außerdem wurde festgestellt, dass die erzwungenen Richtungswechsel für das den Kanal durchströmenden Fluid eine schnellere und vollständigere Verdampfung zur Folge hat. So lassen sich beispielsweise bei Fördermengen durch den Kanal im Bereich von bis zu 125 Milliliter pro Minute Verdampfungswinkungsgrade deutlich oberhalb von 95%, insbesondere oberhalb von 98% erreichen und damit eine überraschend deutliche Verbesserung im Hinblick auf eine gleichartige gerade verlaufende Kanalstrecke.

Bei der erfindungsgemäßen Verdampfervorrichtung umfasst zumindest der Verdampfungsabschnitt des wenigstens einen Kanals zumindest teilweise mindestens ein Rohr. Unter einem Rohr wird insbesondere ein länglicher Hohlkörper verstanden, dessen Länge wesentlich größer als sein Querschnitt ist. Der Querschnitt kann eine beliebige Form haben, wobei ein runder Querschnitt aufgrund des guten Verhältnisses zwischen Umfang und Querschnittsfläche bevorzugt ist, da dieser einen guten Wärmeeintrag erlaubt. Bevorzugt hat das mindestens eine Rohr eine Wandstärke von 0,1 bis 0,5 mm (Millimeter), da diese eine gute stoffschlüssige Anbindbarkeit an den Grundkörper erlaubt. Insbesondere erlaubt dies das Eingießen des Rohres in den Grundkörper, da die Wandstärke einerseits groß genug ist, um hier beim Eingießen ein Durchschmelzen des Rohrs zu verhindern, ein Anschmelzen der äußeren Schicht des Rohres aber zu erlauben. Andererseits ist die Wandstärke so klein, dass noch ein guter Wärmeübergang möglich ist.

Bei der erfindungsgemäßen Verdampfervorrichtung ist das Rohr stoffschlüssig mit dem Grundkörper verbunden. Insbesondere ist hier ein Eingießen (bzw. auch Vergießen genannt) des mindestens einen Rohres in den oder mit dem Grundkörper vorteilhaft. Durch das Eingießen oder Vergießen wird ein sicherer stoffschlüssiger Kontakt zwischen Grundkörper und Rohr und somit dem Verdampfungsabschnitt erreicht, ohne das sich Spalte zwischen Grundkörper und Verdampfungsabschnitt bilden. So ist ein guter Wärmekontakt und damit ein guter Wärmeübergang möglich, so dass eine effektive Verdampfung in dem Verdampfungsabschnitt erfolgen kann. Bevorzugt kann der Grundkörper auch durch das zum Vergießen eingesetzte Giessmaterial selbst gebildet werden.

Gemäß einer weiteren vorteilhaften Weiterbildung ist das Rohr aus einem Material umfassend mindestens einen der folgenden Stoffe ausgebildet:
a) Stahl;
b) Aluminium; und
c) Titan.

Insbesondere dann, wenn das Vergießen des mindestens einen Rohres mit einem Aluminium umfassenden Stoff, insbesondere Aluminium, erfolgt, weisen Stahl, bevorzugt hochtemperatur- und korrosionsfester Stahl und Titan Schmelzpunkte auf, die oberhalb des Schmelzpunktes von Aluminium liegen. Auch eine Aluminiumbasierte oder -umfassende Legierung mit einem höheren Schmelzpunkt als Aluminium ist vorteilhaft einsetzbar.

Gemäß einer weiteren Weiterbildung der Verdampfervorrichtung weist der wenigstens eine Kanal in dem Verdampfungsabschnitt zumindest eines der folgenden Merkmale auf:
5.1 mehrere abwechselnd gerader Verlaufsbereiche und gekrümmte Verlaufsbereiche,
5.2 gekrümmte Verlaufsbereiche mit einer Erweiterung eines Kanalquerschnitts,
5.3 eine Kanalabschnittslänge von 300 bis 1000 mm [Millimeter],
5.4 einen mittleren Kanalquerschnitt von 0,2 bis 10 mm²,
5.5 verschieden gekrümmte Verlaufsbereiche,
5.6 mehrere gekrümmte Verlaufsbereich mit einer Krümmung von mindestens 90°,
5.7 eine Anordnung in einer Verdampferebene des Grundkörpers,
5.8 eine Aluminium aufweisende Kanalwand,
5.9 eine Titan aufweisende Kanalwand,
5.10 eine Kanalwand mit einer gemittelten Rautiefe R_{Z} im Bereich von 2 µm [Mikrometer] bis 50 µm,
5.11 eine hygroskopisch aktive Kanalwand und
5.12 mit einer Verengung eines Kanalquerschnitts.

Im Hinblick auf die vorstehend genannten Merkmale wird bevorzugt, dass der Kanal in dem Verdampfungsabschnitt zumindest fünf und bevorzugt sogar mindestens acht der Merkmale aufweist, insbesondere eine Kombination aus den Merkmalen 5.1, 5.2, 5.3, 5.4, 5.7, 5.8, 5.10, 5.11.

Merkmal 5.1 ist insbesondere so zu verstehen, dass der Kanal wiederholt gerade, insbesondere zueinander parallel verlaufende, Verlaufsbereich aufweist, zwischen denen jeweils ein gekrümmter Verlaufsbereich vorgesehen ist. Gerade bei einer parallelen Ausrichtung der geraden Verlaufsbereiche ist der gekrümmte Verlaufsbereich beispielsweise nach Art einer 180°-Wendung bzw. einer zweimaligen 90°-Wendung (ggf. mit einem dazwischen liegenden kürzeren geraden Verlaufsbereich) ausgeführt.

Zu Merkmal 5.2 sei angemerkt, dass im gekrümmten Verlaufsbereich eine Erweiterung des Kanalquerschnitts um mindestens 30 %, insbesondere mindestens 40 % erreicht wird. Dabei ist die Erweiterung bevorzugt nach Art einer Auswölbung im Bereich der strömungstechnischen Außenseite des gekrümmten Verlaufsbereichs angeordnet. Es ist auch möglich, dass die Erweiterung eine Fortführung des vorherigen geraden Verlaufsbereiches über den gekrümmten Verlaufsbereich hinaus darstellt. Eine solche Erweiterung bildet ebenfalls ein Strömungsreservoir für eine turbulente Strömung und führt damit zu einem besonders innigen Kontakt mit der heißen Kanalwand in diesem Bereich.

Die Merkmale 5.3 und 5.4 veranschaulichen, über welche kleine Wärmeaustauschfläche (Kanalabschnittslänge x mittlerer Kanalumfang) die zur vollständigen Verdampfung erforderliche Energie hier eingebracht werden kann. Bevorzugt ist dabei, dass der Kanal in dem Verdampfungsabschnitt mindestens zehn (10), bevorzugt mindestens zwanzig (20), gekrümmte Verfahrensbereiche über die angegebene Kanalabschnittslänge bildet.

Merkmal 5.5 betrifft z.B. eine Ausführungsvariante, bei der keine parallel zueinander angeordneten geraden Verlaufsbereiche gebildet sind, sondern bei der, gegebenenfalls unter Weglassen der geraden Verlaufsbereiche, verschiedenartig gekrümmte Verlaufsbereiche vorgesehen sind. Diese unterscheiden sich beispielsweise durch verschiedene Krümmungsradien.

Um regelmäßig eine kompakte Anordnung zu erzielen und gleichzeitig eine gute Strömungscharakteristik zu realisieren, wird vorgeschlagen, mehrere gekrümmte Verlaufsbereiche mit einer Krümmung von zumindest 90° [Grad] vorzusehen (vergleiche Merkmal 5.6). Besonders bevorzugt ist dabei auch, dass sich diese Krümmung ebenso wie der gesamte Kanal in dem Verdampfungsabschnitt in einer gemeinsamen Verdampferebene des Grundkörpers befindet (vgl. Merkmal 5.7). Dies hat den Vorteil, dass sich ein solcher Kanal relativ einfach fertigen lässt, wobei darüber hinaus auch eine gleichmäßige Temperatureinbringung in die gemeinsame Verdampferebene ermöglicht ist.

Im Hinblick auf das Material wird in Merkmal 5.8 vorgeschlagen, dass die Kanalwand mit Aluminium gebildet ist - ggf. auch mit einer (in den Grundkörper integrierten und die Kanalswand wenigstens teilweise bildenden) Einlage. Ganz besonders bevorzugt ist, dass die Materialbestandteile der (mit dem Fluid in Kontakt stehenden) Kanalwand zumindest mit einen Massenanteil von über 50%, insbesondere 90%, Aluminium und/oder Aluminium-Verbindungen umfassen. Aluminium hat besonders positive Eigenschaften im Hinblick auf die Wärmeübertragung und kann unter Bildung von Aluminiumoxid sogar eine hydrolytische Aktivität aufweisen. Im Hinblick auf eine besonders gute Wärmeleitung wird auch vorgeschlagen, dass die Oberflächenrauhigkeit der Kanalwand im Bereich von 2 µm bis 50 µm liegt, insbesondere in einem Bereich zwischen 5 und 20 µm. Zur Bereitstellung einer hydrolytisch aktiven Kanalwand können gegebenenfalls (zusätzliche) Beschichtungen vorgesehen sein, wobei insbesondere die Bildung von metallischen Oxiden, z. B. von Aluminium, Titan und/oder Vanadium, bevorzugt ist. Auch die Ausbildung der Kanalwand mit Titan (Merkmal 5.9) ist vorteilhaft möglich. Titan weist eine hohe Schmelztemperatur auf, zudem sind Oxide des Titans hydrolytisch aktiv.

Gemäß einer Weiterbildung der Verdampfervorrichtung bildet der wenigstens eine Kanal zwischen der zumindest einen Zuleitung und dem Verdampfungsabschnitt einen Einlaufabschnitt, der zum Verdampfungsabschnitt versetzt angeordnet ist. "Versetzt" umfasst in diesem Zusammenhang insbesondere eine Lage, bei der der Einlaufschnitt einem geringeren thermischen Einfluss wenigstens eines Heizelements oder einer geringeren Anzahl von Heizelementen ausgesetzt ist. So kann sich das mindestens eine Heizelement beispielsweise auch bis hin in einen Nachbarbereich des Einlaufabschnittes erstrecken, die Einwirkung auf diesen Kanalabschnitt ist dann jedoch bevorzugt reduziert.

Im Hinblick auf die vorstehend genannten Erläuterungen wird als bevorzugt erachtet, dass der wenigstens eine Kanal in den Einlaufabschnitt zumindest eines der folgenden Merkmale aufweist:
7.1 eine gegenüber einer Verdampferebene des Grundkörpers versetzte Lage,
7.2 einen mittleren Kanalquerschnitt von 0,2 bis 30 mm² [Quadratmillimeter],
7.3 eine Kühlvorrichtung,
7.4 eine galvanische Trennung.

Betrachtet man also den bevorzugten Aufbau der Verdampfervorrichtung, bei der der Kanal in dem Verdampfungsabschnitt in einer gemeinsamen Verdampferebene angeordnet ist, so wird hier vorgeschlagen, den Einlaufabschnitt außerhalb dieser Ebene bis hin zum Verdampfungsabschnitt zu führen. Erstreckt sich die Verdampferebene beispielsweise über eine Längsachse des Grundkörpers, so kann der Einlaufabschnitt parallel zu dieser Längsachse außerhalb der Verdampferebene positioniert sein. Bevorzugt ist, da hier überwiegend auch noch eine Flüssigkeit geführt werden soll, hier einen etwas geringeren mittleren Kanalquerschnitt vorzusehen. Dabei kann der Einlaufabschnitt beispielsweise als einfache Bohrung ausgeführt sein, so dass der Einlaufabschnitt zumindest überwiegend geradlinig ausgebildet ist.

Zudem wird auch vorgeschlagen, dass der Einlaufabschnitt mit einer Kühlvorrichtung ausgebildet ist. Eine solche Kühlvorrichtung kann vorgesehen sein, um die Temperatur im Einlaufabschnitt auch bei verschiedenem Betrieb der Heizelemente zu begrenzen. So können beispielsweise gegebenenfalls gezielt aktivierbare Peltierelemente vorgesehen sein, die im Bedarfsfall Wärme aus dem Einlaufabschnitt abführen.

Darüber hinaus wird auch als vorteilhaft erachtet, eine galvanische Trennung zwischen der Zuleitung und dem Einlaufabschnitt vorzusehen. Damit kann, gerade bei einer gleichzeitigen Vorsehung einer galvanische Trennung im Bereich des Auslaufabschnittes, eine elektrische Entkopplung des Grundkörpers gegenüber angrenzenden Bauteilen erreicht werden. Dies kann gerade dann von Vorteil sein, wenn ein Teil des Grundkörpers direkt durch elektrischen Strom beheizt wird (Ohmsche Widerstandserwärmung).

Gemäß einer weiteren Ausführungsvariante der Erfindung bildet der wenigstens eine Kanal zwischen dem Verdampfungsabschnitt und der zumindest einen Ableitung einen Auslaufabschnitt, der eine Aufweitung des Kanalquerschnitts umfasst. Die Aufweitung ist dabei so gestaltet, dass hier bevorzugt ein Vielfaches, z.B. mindestens das 4-fache oder sogar zumindest das 10-fache, des vorherigen mittleren Kanalquerschnitts erreicht wird. Damit ist eine weitere Entspannung des mittlerweile gasförmigen Fluides gewährleistet.

In diesem Zusammenhang ist bevorzugt, dass der wenigstens eine Kanal in dem Auslaufabschnitt zumindest eines der folgenden Merkmale aufweist:
9.1 zumindest einen hydrolytisch aktiven Reaktorraum,
9.2 zumindest einen Wabenkörper, der mit Aluminium aufweisenden Blechfolien eine Vielzahl von Strömungspfaden bildet,
9.3 eine Aufweitung in Form eines Konus zwischen dem Verdampfungsabschnitt und einem hydrolytisch aktiven Reaktorraum,
9.4 eine thermische Isolierung gegenüber dem wenigstens einen Heizelement.

Der hydrolytisch aktive Reaktorraum weist bevorzugt eine Beschichtung auf, die eine katalytisch motivierte Hydrolyse bewirkt. Hierzu kommen z.B. Aluminiumoxid, Titanoxid, Vanadiumoxid und/oder Wolfram-Oxid bzw. eine Mischung aus zumindest zweien der vorstehend genannten Katalysatoren in Betracht.

Um einen möglichst innigen Kontakt des Gases mit einer hydrolytisch aktiven Beschichtung zu gewährleisten wird auch vorgeschlagen, dass in dem Reaktorraum (wenigstens) ein so genannter Wabenkörper vorgesehen ist. Dieser ist beispielsweise mit glatten und gewellten Blechfolien gebildet, die so angeordnet sind, dass eine Vielzahl von Strömungspfaden bzw. Mikrokanälen gebildet sind. Diese Strömungspfade können zudem Verwirbelungsbereiche aufweisen, gegebenenfalls ist auch eine Vielzahl von Öffnungen vorgesehen, die einen Strömungsaustausch zwischen den einzelnen Strömungspfaden gewährleisten. Die Blechfolien können grundsätzlich auch mit Stahlfolien gebildet sein, sie sind jedoch bevorzugt (wenigstens an der Oberfläche in einem überwiegenden Anteil) mit Aluminium gebildet. Zusätzlich kann eine entsprechend hydrolytisch aktive Beschichtung vorgesehen sein, beispielsweise auch in Form von Aluminiumoxid. Insbesondere für den Fall, dass ein Wabenkörper in dem Reaktorraum angeordnet ist, eignet sich eine Aufweitung in Form eines Konus dazu, das einströmende Gas gleichmäßig über den Querschnitt des Wabenkörpers zu verteilen, so dass alle Strömungspfade gleichermaßen zur katalytischen Umwandlung genutzt werden. Wenigstens teilweise, bevorzugt jedoch vollständig, ist um den Reaktorraum eine thermische Isolierung vorzusehen, so dass die Temperatur im Reaktorraum, gegebenenfalls gezielt, einstellbar ist.

Darüber hinaus wird auch als vorteilhaft erachtet, dass der Grundkörper zumindest eines der folgenden Merkmale aufweist:
10.1 mit Aluminium als Material gebildet,
10.2 einen zweiteiligen Aufbau mit einer zentralen Verdampferebene,
10.3 zumindest der Verdampfungsabschnitt des wenigstens einen Kanals ist in einer Trennfläche des Grundkörpers eingearbeitet (nicht erfindungsgemäß),
10.4 der Einlaufabschnitt des wenigstens einen Kanals ist in nur ein erstes Teil eines zweiteiligen Grundkörpers eingebracht,
10.5 eine Mehrzahl Aufnahmen für jeweils wenigstens ein Heizelement.

Im Hinblick auf die vorteilhaften Wärmeleitungseigenschaften wird hier vorgeschlagen, den Grundkörper zu einem überwiegenden Anteil aus Aluminium zu fertigen (Massenanteil z.B. größer 95%). Bevorzugt ist, den Grundkörper nach Art eines massiven Zylinders auszuführen, wobei beispielsweise eine mittige Trennung entlang der Längsachse dazu führt, dass eine Trennfläche zwischen zwei im wesentlichen gleichgroßen Teilen des Grundkörpers eingebracht ist. Diese Trennfläche kann nun genutzt werden, um beispielsweise den mäanderförmigen Verlauf des Kanals durch ein oberflächenabtragendes Verfahren einzubringen. Hierfür bieten sich beispielsweise Fräsverfahren, Schleifverfahren, Ätzverfahren oder ähnliche Verfahren an.

Im Übergangsbereich zwischen dem Einlaufabschnitt und dem Verdampfungsabschnitt kann dann ausgehend von der Trennfläche eine Bohrung radial zur Längsachse vorgesehen sein, die somit einen Versatz hin zum Einlaufabschnitt des Kanals bildet. Der Einlaufabschnitt wird dann parallel zur Längsachse und der Trennfläche in nur einem ersten Teil des zweiteiligen Grundkörpers eingearbeitet. Ganz besonders bevorzugt ist, dass lediglich ein Kanal zur Strömungsführung des Fluides vorgesehen ist.

Um den Kanal herum, insbesondere mit einem gleichen Abstand zur Längsachse, können nun mehrere Aufnahmen für jeweils wenigstens ein Heizelement vorgesehen sein. Die Aufnahmen, die insbesondere Hohlräume aufweisen, sind zumindest von einer Seite aus erreichbar, so dass beispielsweise die Heizelemente eingeschoben werden können. Grundsätzlich ist möglich, beispielsweise für jeden Abschnitt (Einlaufabschnitt, Verdampfungsabschnitt, Auslaufabschnitt) in jeweils einer Aufnahme ein getrenntes Heizelement vorzusehen, so dass die einzelnen Abschnitte voneinander unabhängig hinsichtlich der gewünschten Temperatur geregelt werden können. Aus Gründen des einfachen Aufbaus und der sich in Folge der hier vorgeschlagenen Maßnahmen zum Teil selbst einstellenden Temperaturgradienten kann es jedoch auch ausreichend sein, in jeder Aufnahme nur ein Heizelement vorzusehen, welches sich über alle Abschnitte des Kanals oder zumindest über den Einlaufabschnitt und den Verdampfungsabschnitt, erstreckt.

Darüber hinaus wird auch vorgeschlagen, dass die zumindest eine Zuleitung mit einer Pumpe verbunden ist und einen unnachgiebigen Leitungsquerschnitt aufweist. Die Pumpe ermöglicht beispielsweise eine Förderung des Fluids mit einem Druck bis maximal 6 bar, wobei regelmäßig im Betrieb ein Druck von zumindest 2 bar aufrechterhalten werden sollte. Gegebenfalls ist möglich, eine Pumpe vorzusehen, die in zwei Richtungen fördern kann, so dass mit dieser einzelnen Pumpe einerseits Fluid hin zur Verdampfervorrichtung transportiert werden kann, es in dem anderen Fall jedoch auch möglich ist, die Zuleitung wieder von Fluid zu befreien - insbesondere wenn keine weitere Verdampfung mehr erforderlich ist. Für eine möglichst genaue Dosierung wird zudem vorgeschlagen, den Leitungsquerschnitt der Zuleitung unnachgiebig zu machen, das heißt insbesondere, hier während des Betriebsdrucks eine Aufweitung des Durchmessers von höchstens 0,25 % zuzulassen.

Des Weiteren wird auch eine Verdampfervorrichtung vorgeschlagen, bei der die zumindest eine Ableitung mit einer Abgasleitung verbindbar ist und einen perforierten Endbereich hat. Damit ist insbesondere gemeint, dass die Ableitung einen Endbereich hat, in dem eine Vielzahl von Öffnungen vorgesehen ist, durch die das Gas auch seitlich zur Ableitung austreten kann. Dieser perforierte Endbereich kann nun in eine Abgasleitung hineinragen, wobei eine gleichmäßige Verteilung des Ammoniak enthaltenden Gases über den Querschnitt der Abgasleitung realisiert ist.

Ganz besonders bevorzugt findet die Erfindung Einsatz bei einem Kraftfahrzeug aufweisend einen Abgase erzeugenden Antrieb und wenigstens eine Abgasleitung. Dabei wird vorgeschlagen, zumindest eine der hier beschriebenen Verdampfervorrichtungen so zu positionieren, dass deren Zuleitung mit einem Vorratsbehälter und einem Fluidförderer zusammenwirkt und deren Ableitung in die Abgasleitung ragt. Als Fluidförderer kommt insbesondere eine Pumpe zum Einsatz.

Gemäß einem weiteren Aspekt der vorliegenden Erfindung wird ein Verfahren zur Herstellung einer Verdampfervorrichtung umfassend einen Grundkörper mit zumindest einer Zuleitung und zumindest einer Ableitung, in dem wenigstens ein Heizelement und wenigstens ein Kanal zur Verbindung der Zuleitung mit der Ableitung vorgesehen ist, wobei das wenigstens eine Heizelement mit einem Verdampfungsabschnitt des wenigstens einen Kanals in wärmeleitendem Kontakt ist, bei dem zumindest ein Teil des Verdampfungsabschnittes aus mindestens ein Rohr ausgebildet ist, wobei das mindestens eine Rohr aus einem Material umfassend mindestens einen der folgenden Stoffe:
a) Aluminium;
b) Titan; und
c) Stahl
mit einem Gussmaterial vergossen wird.

Bevorzugt wird das mindestens eine Rohr in einen Grundkörper eingelegt und mit diesem vergossen. Dieses Verfahren wird insbesondere zur Herstellung der hier erfindungsgemäß beschriebenen Verdampfervorrichtung eingesetzt.

Gemäß einer vorteilhaften Ausgestaltung des erfindungsgemäßen Verfahrens weist das Material, aus dem das mindestens eine Rohr ausgebildet ist, einen höheren Schmelzpunkt auf als das Gussmaterial. Grundsätzlich bevorzugt ist auch eine Ausgestaltung des Verfahrens, bei der die Temperatur des Gussmaterials während des Vergießens so gewählt wird, dass ein Anschmelzen der äußeren Bereiche des mindestens einen Rohres erfolgt, so dass es zu einer innigen stoffschlüssigen Verbindung zwischen Gussmaterial und Material des Rohres kommt, ohne dass die inneren Bereiche des mindestens einen Rohres aufschmelzen.

Gemäß einer weiteren vorteilhaften Ausgestaltung des erfindungsgemäßen Verfahrens umfasst das Gussmaterial Aluminium umfasst. Hierunter wird verstanden, dass als Gussmaterial Aluminium oder eine Legierung umfassend Aluminium zum Einsatz kommt. Insbesondere wird als Gussmaterial ein Material mit einer Wärmeleitfähigkeit von mehr als 200 W/(m K) (Watt pro Meter und Kelvin) eingesetzt.

Gemäß einer weiteren vorteilhaften Ausgestaltung des erfindungsgemäßen Verfahrens wird das Rohr von einem Fluid durchströmt, während es vergossen wird. Hierdurch kann eine Temperierung, insbesondere Kühlung der inneren Oberfläche des mindestens einen Rohres erreicht werden, mittels derer ein Aufschmelzen des Rohrmaterials auf der gesamten Dicke des Rohres, mithin ein Durchschmelzen, verhindert werden kann.

Gemäß einer weiteren vorteilhaften Ausgestaltung des erfindungsgemäßen Verfahrens umfasst das Fluid mindestens einen der folgenden Stoffe:
A) Luft;
B) ein Inertgas;
C) Sauerstoff (O2);
D) Stickstoff (N2); und
E) ein aus der Verdampfung eines verflüssigten Gases gewonnenes Gas.

Gemäß einer weiteren vorteilhaften Ausgestaltung des erfindungsgemäßen Verfahrens wird mindestens einer der folgenden Parameter: a) der Volumenstrom des Fluides durch das Rohr, b) die Temperatur des Fluides und die Zusammensetzung des Fluides so gewählt, dass ein Durchschmelzen des mindestens einen Rohres beim Vergießen sicher vermieden wird.

Die Erfindung sowie das technische Umfeld werden anhand der Figuren näher erläutert. Es ist darauf hinzuweisen, dass die in den Figuren veranschaulichten Ausgestaltungen der Verdampfereinrichtung die Erfindung nicht beschränken sollen. Es zeigen schematisch:
- Fig. 1:: in einer dreidimensionalen Explosionsdarstellung eine erste Ausführungsvariante einer Verdampfervorrichtung,
- Fig. 2:: eine Draufsicht auf ein unteres, erstes Teil eines Grundkörpers,
- Fig. 3:: einen Querschnitt durch das erste Teil des Grundkörpers gemäß Fig. 2,
- Fig. 4:: ein Detail aus Fig. 2, wie dort gekennzeichnet,
- Fig. 5:: die Anordnung einer Verdampfervorrichtung in einem Kraftfahrzeug,
- Fig. 6:: eine Ausführungsvariante eines Wabenkörpers,
- Fig. 7:: eine perspektivische Ansicht eines Rohres;
- Fig. 8 bis 10:: unterschiedliche Ausgestaltungen eines Rohres, und
- Fig. 11:: ein vergossenes Rohr.

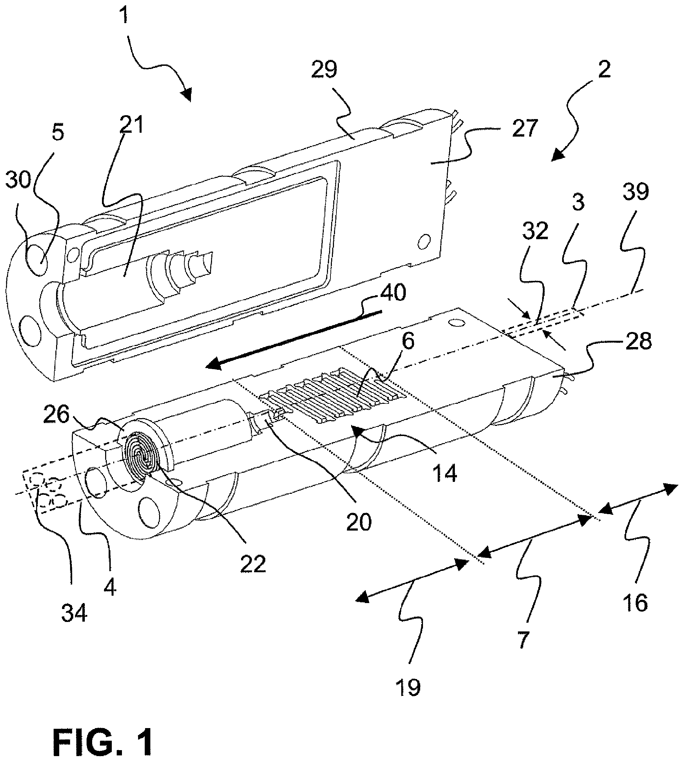

Fig. 1 soll schematisch den Aufbau einer besonders bevorzugten Ausführungsvariante der Verdampfervorrichtung 1 angeben, wobei der hier zum Einsatz gelangende Grundkörper 2 zur Veranschaulichung aufgeklappt dargestellt ist. Demnach umfasst der Grundkörper 2 ein erstes Teil 28 und ein zweites Teil 29, die für den Betrieb der Verdampfervorrichtung 1 über ihre gemeinsame Trennfläche 27 zusammengefügt werden. Bei dieser zweiteiligen Ausgestaltung des Grundkörpers 2 weist sowohl das erste Teil 28 als auch das zweite Teil 29 jeweils zwei Aufnahmen 30 für je ein Heizelement 5 auf, welches sich über die gesamte Länge in Richtung der Längsachse 39 des Grundkörpers 2 erstreckt. Im rechten Bereich sind noch die elektrischen Anschlüsse für ein, beispielsweise mit PTC-Widerstand (PTC: positive temperature coefficient bzw. so genanntem Kaltleiter), gebildeten Heizelements, veranschaulicht. Ausgehend von der Trennfläche 27 sind im zweiten Teil 29 der obere Bereich eines Reaktorraumes 21 eingearbeitet. Damit wird in diesem zweiten Teil 29 lediglich der Auslaufabschnitt 19 des Kanals 6 mit gebildet.

Der Grundkörper 2 bzw. die Verdampfervorrichtung 1 wird im Wesentlichen entlang der Längsachse 39 in Strömungsrichtung 40 durchströmt. Das zu behandelnde Fluid tritt dabei über eine Zuleitung 3 mit einem vorgegebenen Leitungsquerschnitt 32 in das erste Teil 28 des Grundkörpers 2, der bevorzugt aus Aluminium gefertigt ist, ein. Der Bereich des Kanals 6, der sich über den Einlaufabschnitt 16 erstreckt, ist hier nicht dargestellt, da dieser versetzt zur Trennfläche 27 im Inneren des ersten Teils 28 ausgebildet ist. Erst im Bereich des Verdampfungsabschnitts 7 wird der Kanal 6 hin zur Trennfläche 27 geführt, wo er letztendlich einen mäanderförmigen Verlauf innerhalb einer Verdampferebene 14 ausführt. Im Anschluss an diesen Verdampfungsabschnitt 7 weist der Kanal 6 eine Aufweitung 20 auf, die den Übergang hin in den Auslaufabschnitt 19 realisiert. Diese Aufweitung 20 mündet in den Reaktorraum 21, in dem hier ein, von einer thermischen Isolierung 26 umgebener, Wabenkörper 22 nach Art eines Hydrolyse-Katalysator-Trägerkörpers eingearbeitet bzw. positioniert ist. Daran anschließend ist die Ableitung 4 angedeutet, die einen perforierten Endbereich 34 aufweist.

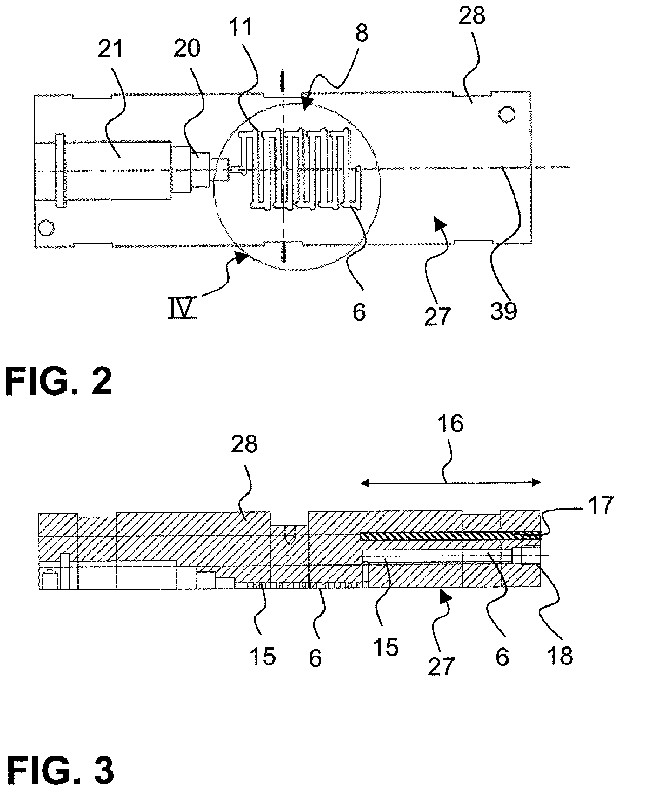

Fig. 2 zeigt eine Draufsicht auf die Trennfläche 27 des ersten Teiles 28. Die Kanalführung orientiert sich im Wesentlichen entlang der Längsachse 39, wobei der Kanal 6 erst im mittleren Bereich an die Trennfläche 27 geführt wird. Dort führt der Kanal 6 einen mäanderförmigen Verlauf 8 aus, wobei in den einzelnen Umlenkungen jeweils eine Erweiterung 11 vorgesehen ist. Nachdem nunmehr der Kanal 6 mehrfach über die Längsachse 39 hinweggeführt wird, beispielsweise acht oder zehn Mal, wird er wieder zentrisch zur Längsachse 39 geführt und erfährt dann eine Kanalquerschnittserweiterung hin zur Aufweitung 20, die letztendlich in den Reaktorraum 21 übergeht.

Dies wird noch einmal im Querschnitt, wie er in Fig. 3 dargestellt ist, deutlich. Hierbei ist auch zu erkennen, dass der Kanal 6 im Bereich des Einlaufabschnittes 16 nach Art einer Bohrung ausgeführt ist, so dass die Kanalwand 15 ausschließlich vom ersten Teil 28 gebildet ist. Benachbart zu diesem Kanal im Bereich des Einlaufabschnittes 16 ist auch eine Kühlvorrichtung 17, z. B. nach Art eines Peltier-Elementes, zur Einstellung eines so gewünschten Temperaturniveaus, vorgesehen. Im Bereich des Übergangs zur (hier nicht dargestellten) Zuleitung ist zudem eine galvanische Trennung 18 vorgesehen. Beim Verlassen des Einlaufabschnittes 16 wird der Kanal 6 hin zur Trennfläche 17 geführt, wobei der Kanal 6 dort in die Trennfläche 27 eingearbeitet ist, insbesondere eingefräst. Somit wird in die Kanalwand 15 in diesem Verdampfungsabschnitt 7 von beiden Teilen des Grundkörpers 2 gebildet (nicht erfindungsgemäß).

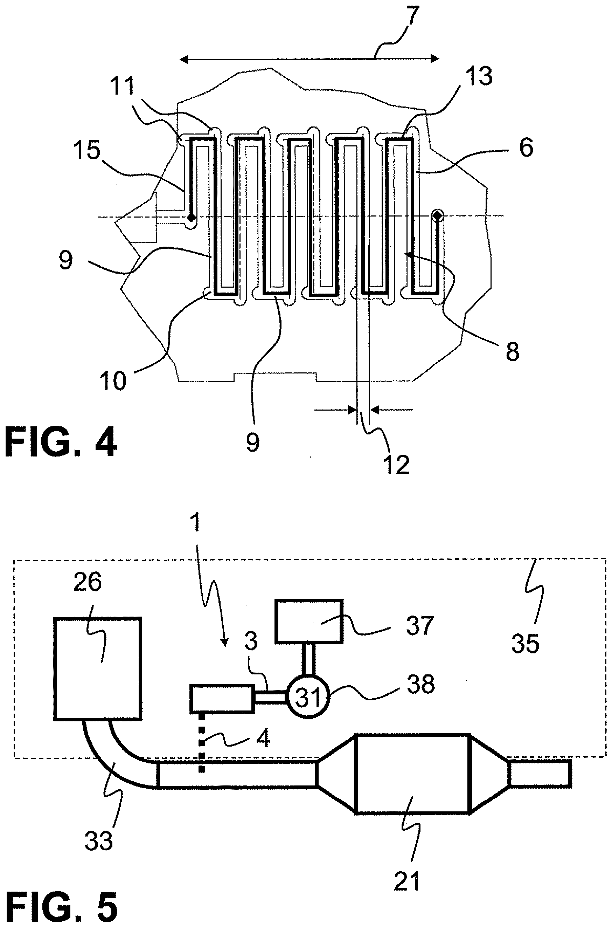

Fig. 4 veranschaulicht nun im Detail den mäanderförmigen Verlauf 8 des Kanals 6 im Verdampfungsabschnitt 7. Der Kanal 6 weist einen überwiegend gleichbleibenden Kanalquerschnitt 12 auf. Dies betrifft insbesondere die geraden Verlaufsbereiche 9, die wiederholt von gekrümmten Verlaufsbereichen 10 unterbrochen sind. In den gekrümmten Verlaufsbereichen 10 ist in Verlängerung zu dem vorangegangenem geraden Verlaufsbereich 9 eine Erweiterung 11 vorgesehen. Dies ermöglicht es, über eine relativ kurze Kanalabschnittslänge 13 eine vollständige Verdampfung zu bewirken. Zusätzlich kann die Kanalwand 15 mit einer vorgegebenen Oberflächenrauhigkeit bereitgestellt werden, die die Verdampfung weiter unterstützt. Teil der Kanalwand 15 können auch hydrolytische Beschichtungen sein, beispielsweise Aluminiumoxid.

Fig. 5 veranschaulicht schematisch eine mögliche Einsatzvariante der Verdampfervorrichtung 1. Beim Kraftfahrzeug 35 ist ein Antrieb 26 vorgesehen, beispielsweise eine Verbrennungskraftmaschine (insbesondere ein Dieselmotor), dessen Abgas über eine Abgasleitung 13 an die Umgebung weitergeleitet wird. Hier wird nun vorgeschlagen, dass beispielsweise wässrige Harnstofflösung in einem Vorratsbehälter 37 bevorratet und auf Bedarf mittels eines Fluidförderers 38, beispielsweise nach Art einer Pumpe 31, der Verdampfervorrichtung 1 über die Zuleitung 3 zugeführt wird. Nach dem Verdampfen und der "internen" Hydrolyse wird das Ammoniakgas über die Ableitung 4, die bevorzugt in einem bevorzugten Endbereich hat, in die Abgasleitung 33 eingeführt. Das Ammoniakgas kann sich nun mit dem Abgas vermengen, wobei gegebenenfalls noch Mischelemente vorgesehen werden können. Dieses Stoffgemisch trifft dann auf einen katalytischen Konverter 21, beispielsweise einen so genannten SCR-Katalysator, so dass dort die Stickoxide wirksam und signifikant umgesetzt werden können.

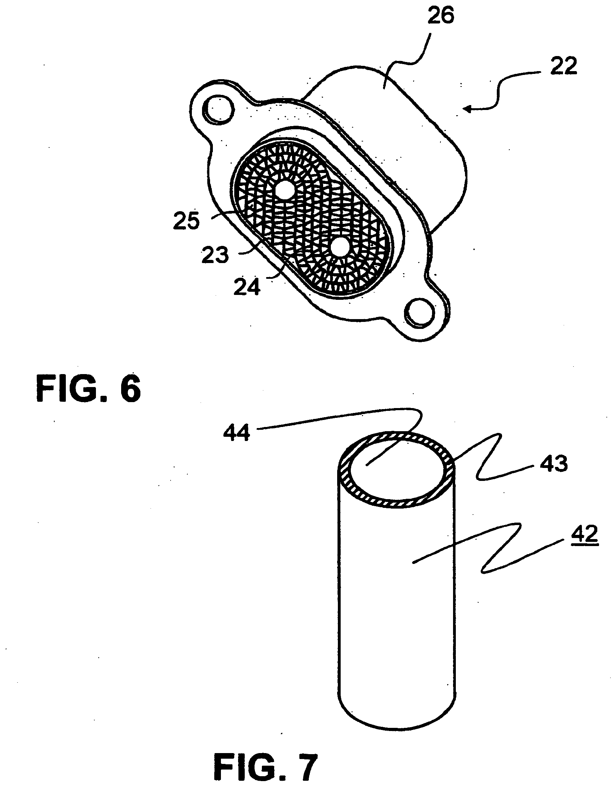

Gerade für den Fall, dass Teil der Verdampfervorrichtung 1 auch einen Hydrolyse-Katalysator umfassen soll, bietet sich die Integration eines, insbesondere metallischen, Wabenkörpers an. Ein solcher Wabenkörper 22 ist in Fig. 6 beispielhaft veranschaulicht. Der Wabenkörper 22 kann mit einer Mehrzahl glatter Blechfolien 23 und strukturierter Blechfolien 24 gebildet sein, die für das zu behandelnde Fluid durchströmbare Strömungspfade 25 bildet. In diesen Strömungspfaden 25 kann dann der Hydrolyse-Katalysator z.B. nach Art einer Oberflächenbeschichtung positioniert sein. Dabei ist einerseits möglich eine separate Beschichtung vorzusehen, es ist jedoch auch möglich, beispielsweise wenn die Blechfolien im wesentlichen Anteil Aluminium umfassen, damit selbst generiertes Oxid zur Umwandlung bzw. Hydrolyse einzusetzen. Der Wabenkörper 22 kann zusätzlich von einer thermischen Isolierung 26 umgeben sein.

Erfindungsgemäß kann der Kanal 6 zumindest in Teilbereichen durch mindestens ein Rohr 42 gebildet werden. Fig. 7 zeigt schematisch ein Beispiel eines Rohres 42 in perspektivischer Ansicht. Das Rohr 42 weist eine Wandung 43 auf, die einen Innenraum 44 begrenzt. Die Wandung 43 ist bevorzugt stoffschlüssig mit dem Grundkörper 2 (hier nicht gezeigt) verbunden, insbesondere mit diesem vergossen.

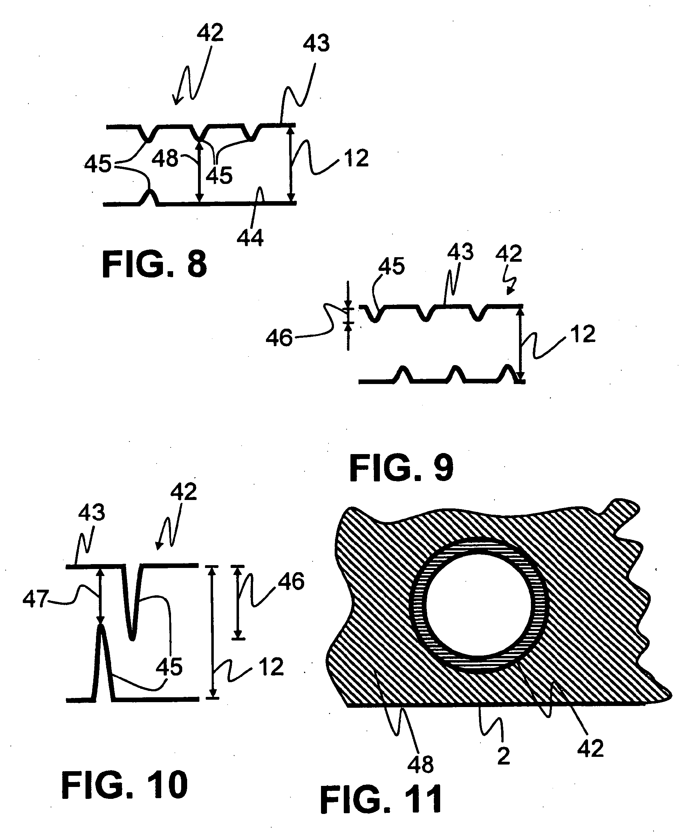

Das mindestens eine Rohr 42 kann mindestens einen Vorsprung 45 in den Innenraum 44 des Rohres 42 hinein aufweisen, wie die Figuren 8 bis 10 schematisch zeigen. Dieser bildet eine Verengung 47 des Kanalquerschnitts 12. Die Verengungen 47 sind exemplarisch eingezeichnet.

Der mindestens eine Vorsprung 45 kann im Querschnitt das gesamte Rohr 42 umlaufen oder kann auch nur in radialen Teilbereichen, mithin teilumfänglich ausgebildet sein. Bei teilumfänglichen Vorsprüngen 45 können diese jeweils zumindest teilweise andere Umfangsbereiche abdecken und können insbesondere gegenüberliegend symmetrisch - wie Fig. 8 zeigt - oder zueinander versetzt - wie die Figuren 9 und 10 zeigen - ausgebildet sein. Die Vorsprungshöhe 46 der Vorsprünge 45 kann dabei homogen oder variabel sein. Insbesondere können die Vorsprünge 45 so ausgestaltet sein, dass ihre Vorsprungshöhe 46 größer als die Hälfte der lichten Weite 47 des Rohres 42 in diesem Bereich ist, wobei die Vorsprünge 45 radial asymmetrisch, bevorzugt im wesentlichen auf gegenüberliegenden Seiten und zueinander versetzt ausgebildet sind, wie dies Fig. 10 zeigt. Bei einem runden Rohr 42 entspricht die lichte Weite 47 dem Rohrdurchmesser. Grundsätzlich bevorzugt sind Ausgestaltungen von Kanälen 6, die eine lichte Weite 47 von 0,1 bis 1 mm, bevorzugt von 0,2 bis 0,5 mm aufweisen.

Im Betrieb wird die Verdampfervorrichtung 1 mit einer zu verdampfenden Flüssigkeit beschickt. Die Vorsprünge 45 führen zu einer verbesserten Verdampfungsleistung, da Tropfen des zu verdampfenden Fluids, die beispielsweise aufgrund eines Dampfpolsters zwischen Tropfen und Wandung 43 des Kanals 6 beziehungsweise des Rohres 42 durch den Kanal 6 und/oder das Rohr 42 treiben, an den mindestens einen Vorsprung 45 stoßen und durch den Kontakt mit diesem zumindest teilweise verdampft werden.

Fig. 11 zeigt einen Ausschnitt eines Grundkörpers 2. Als Kanal 6 enthält dieser ein Rohr 42, welches mit einem Gussmaterial 48 vergossen ist. Hierdurch ergibt sich eine stoffschlüssige Verbindung zwischen dem Rohr 42 und dem Grundkörper 2, der auch die nicht gezeigten Heizelemente 5 umfasst. Durch die stoffschlüssige Verbindung kommt es zu einem guten Wärmeübergang von den Heizelementen 5 zu dem mindestens einen Rohr 42. Das Gussmaterial 48 ist bevorzugt Aluminium oder Aluminiumhaltig.

### Bezugszeichenliste

- 1: Verdampfervorrichtung
- 2: Grundkörper
- 3: Zuleitung
- 4: Ableitung
- 5: Heizelement
- 6: Kanal
- 7: Verdampfungsabschnitt
- 8: Verlauf
- 9: gerader Verlaufsbereich
- 10: gekrümmter Verlaufsbereich
- 11: Erweiterung
- 12: Kanalquerschnitt
- 13: Kanalabschnittslänge
- 14: Verdampferebene
- 15: Kanalwand
- 16: Einlaufabschnitt
- 17: Kühlvorrichtung
- 18: galvanische Trennung
- 19: Auslaufabschnitt
- 20: Aufweitung
- 21: Reaktorraum
- 22: Wabenkörper
- 23: glatte Blechfolie
- 24: strukturierte Blechfolie
- 25: Strömungspfad
- 26: thermische Isolierung
- 27: Trennfläche
- 28: erstes Teil
- 29: zweites Teil
- 30: Aufnahme
- 31: Pumpe
- 32: Leitungsquerschnitt
- 33: Abgasleitung
- 34: Endbereich
- 35: Kraftfahrzeug
- 36: Antrieb
- 37: Vorratsbehälter
- 38: Fluidförderer
- 39: Längsachse
- 40: Strömungsrichtung
- 41: Konverter
- 42: Rohr
- 43: Wandung
- 44: Innenraum
- 45: Vorsprung
- 46: Vorsprungshöhe
- 47: Verengung
- 48: Gussmaterial

## Patentansprüche

1. Verdampfervorrichtung (1) umfassend einen Grundkörper (2) mit zumindest einer Zuleitung (3) und zumindest einer Ableitung (4), in dem wenigstens ein Heizelement (5) und wenigstens ein Kanal (6) zur Verbindung der Zuleitung (3) mit der Ableitung (4) vorgesehen ist, wobei das wenigstens eine Heizelement (5) mit einem Verdampfungsabschnitt (7) des wenigstens einen Kanals (6) in wärmeleitendem Kontakt ist und der wenigstens eine Kanal (6) in diesem Verdampfungsabschnitt (7) einen mäanderförmigen Verlauf (8) aufweist, wobei zumindest der Verdampfungsabschnitt (7) des wenigstens einen Kanals (6) zumindest teilweise mindestens ein Rohr umfasst, wobei das Rohr in den Grundkörper eingegossen ist, so dass das Rohr stoffschlüssig mit dem Grundkörper (2) verbunden ist.

2. Verdampfervorrichtung (1) nach Patentanspruch 1, bei der das Rohr aus einem Material umfassend mindestens einen der folgenden Stoffe ausgebildet ist:
a) Stahl;
b) Aluminium; und
c) Titan.

3. Verdampfervorrichtung (1) nach einem der vorhergehenden Patentansprüche, bei der der wenigstens eine Kanal (6) in dem Verdampfungsabschnitt (7) zumindest eines der folgenden Merkmale aufweist:
5.1 mehrere abwechselnd gerade Verlaufsbereiche (9) und gekrümmte Verlaufsbereiche (10),
5.2 gekrümmte Verlaufsbereiche (10) mit einer Erweiterung (11) eines Kanalquerschnittes (12),
5.3 eine Kanalabschnittslänge (13) von 300 bis 1.000 Millimeter,
5.4 einen mittleren Kanalquerschnitt (12) von 0,2 bis 10 Quadratmillimeter,
5.5 verschieden gekrümmte Verlaufsbereiche (10),
5.6 mehrere gekrümmte Verlaufsbereiche (10) mit einer Krümmung von mindestens 90°,
5.7 eine Anordnung in einer Verdampferebene (14) des Grundkörpers (2),
5.8 eine Aluminium aufweisende Kanalwand (15),
5.9 eine Titan aufweisende Kanalwand (15),
5.10 eine Kanalwand (15) mit einer gemittelten Rauhtiefe Rz im Bereich von 2 Mikrometer bis 50 Mikrometer,
5.11 eine hydrolytisch aktive Kanalwand (15); und
5.12 Verlaufsbereiche (10) mit einer Verengung (47) eines Kanalquerschnitts (12).

4. Verdampfervorrichtung (1) nach einem der vorhergehenden Patentansprüche, bei der der wenigstens eine Kanal (6) zwischen der zumindest einen Zuleitung (3) und dem Verdampfungsabschnitt (7) ein Einlaufabschnitt (16) bildet, der zum Verdampfungsabschnitt (7) versetzt angeordnet ist.

5. Verdampfervorrichtung (1) nach Patentanspruch 4, bei der der wenigstens eine Kanal (6) in dem Einlaufabschnitt (16) zumindest eines der folgenden Merkmale aufweist:
7.1 eine gegenüber einer Verdampferebene (14) des Grundkörpers (2) versetzte Lage,
7.2 einen mittleren Kanalquerschnitt (12) von 0,2 bis 30 Quadratmillimeter,
7.3 eine Kühlvorrichtung (17),
7.4 eine galvanische Trennung (18).

6. Verdampfervorrichtung (1) nach einem der vorangegangenen Patentansprüche, bei der der wenigstens eine Kanal (6) zwischen dem Verdampfungsabschnitt (7) und der zumindest einen Ableitung (4) einen Auslaufabschnitt (19) bildet, der eine Aufweitung (20) des Kanalquerschnittes (12) umfasst.

7. Verdampfervorrichtung (1) nach Patentanspruch 6, bei der der wenigstens eine Kanal (6) in dem Auslaufabschnitt (19) zumindest eines der folgenden Merkmale aufweist:
9.1 zumindest einen hydrolytisch aktiven Reaktorraum (21),
9.2 zumindest einen Wabenkörper (22), der mit Aluminium aufweisenden Blechfolien (23, 24) eine Vielzahl von Strömungspfaden (25) bildet,
9.3 eine Aufweitung (20) in Form eines Konus zwischen dem Verdampfungsabschnitt (7) und einem hydrolytisch aktiven Reaktorraum (21),
9.4 eine thermische Isolierung (26) gegenüber dem wenigstens einen Heizelement (5).

8. Verdampfervorrichtung (1) nach einem der vorangegangenen Patentansprüche, bei der der Grundkörper (2) zumindest eines der folgenden Merkmale aufweist:
10.1 mit Aluminium als Material gebildet,
10.2 einen zweiteiligen Aufbau mit einer zentralen Verdampferebene (14),
10.3 eine stoffschlüssige Verbindung zwischen dem Rohr (42) und dem Grundkörper (2) und dem wenigstens einen Heizelement (5) vorliegt,
10.4 der Einlaufabschnitt (16) des wenigstens einen Kanals (6) ist in nur ein erstes Teil (28) eines zweiteiligen Grundkörpers (2) eingebracht,
10.5 eine Mehrzahl Aufnahmen (30) für jeweils wenigstens ein Heizelement (5).

9. Verdampfervorrichtung (1) nach einem der vorangegangenen Patentansprüche, bei der die zumindest eine Zuleitung (3) mit einer Pumpe (31) verbunden ist und einen unnachgiebigen Leitungsquerschnitt (32) aufweist.

10. Verdampfervorrichtung (1) nach einem der vorangegangenen Patentansprüche, bei der die zumindest eine Ableitung (4) mit einer Abgasleitung (33) verbindbar ist und einen perforierten Endbereich (34) hat.

11. Kraftfahrzeug (35) aufweisend einen Abgase erzeugenden Antrieb (36) und wenigstens eine Abgasleitung (33), wobei zumindest eine Verdampfervorrichtung (1) gemäß einem der vorstehenden Patentansprüche vorgesehen ist, deren Zuleitung (3) mit einem Vorratsbehälter (37) und einem Fluidförderer (38) zusammenwirkt und deren Ableitung (4) in die Abgasleitung (33) ragt.

12. Verfahren zur Herstellung einer Verdampfervorrichtung (1) umfassend einen Grundkörper (2) mit zumindest einer Zuleitung (3) und zumindest einer Ableitung (4), in dem wenigstens ein Heizelement (5) und wenigstens ein Kanal (6) zur Verbindung der Zuleitung (3) mit der Ableitung (4) vorgesehen ist, wobei das wenigstens eine Heizelement (5) mit einem Verdampfungsabschnitt (7) des wenigstens einen Kanals (6) in wärmeleitendem Kontakt ist, bei dem zumindest ein Teil des Verdampfungsabschnittes (7) aus mindestens einem Rohr ausgebildet ist, wobei das mindestens eine Rohr aus einem Material umfassend mindestens einen der folgenden Stoffe:
a) Aluminium;
b) Titan; und
c) Stahl
mit einem Gussmaterial (48) vergossen wird.

13. Verfahren nach Patentanspruch 12, bei dem das Material, aus dem das mindestens eine Rohr ausgebildet ist, einen höheren Schmelzpunkt aufweist als das Gussmaterial (48).

14. Verfahren nach Patentanspruch 12 oder 13, bei dem das Gussmaterial (48) Aluminium umfasst.

15. Verfahren nach einem der Patentansprüche 12 bis 14, bei dem das Rohr (42) von einem Fluid durchströmt wird, während es vergossen wird.

16. Verfahren nach Patentanspruch 15, bei dem das Fluid mindestens einen der folgenden Stoffe umfasst:
A) Luft;
B) ein Inertgas;
C) Sauerstoff (O₂);
D) Stickstoff (N₂); und
E) ein aus der Verdampfung eines verflüssigten Gases gewonnenes Gas.

## Claims

1. Evaporator device (1) comprising a basic body (2) with at least one inlet line (3) and at least one outlet line (4), in which basic body (2) is provided at least one heating element (5) and at least one duct (6) for connecting the inlet line (3) to the outlet line (4), with the at least one heating element (5) being in heat-conducting contact with an evaporation section (7) of the at least one duct (6), and with the at least one duct (6) having a meandering profile (8) in said evaporation section (7), with at least the evaporation section (7) of the at least one duct (6) at least partially comprising at least one pipe, with the pipe being cast integrally into the basic body such that the pipe is cohesively connected to the basic body (2).

2. Evaporator device (1) according to Patent Claim 1, in which the pipe is formed from a material comprising at least one of the following substances:
a) steel;
b) aluminum; and
c) titanium.

3. Evaporator device (1) according to one of the preceding patent claims, in which the at least one duct (6) has, in the evaporation section (7), at least one of the following features:
5.1 a plurality of alternating straight profile regions (9) and curved profile regions (10),
5.2 curved profile regions (10) having an extension (11) of a duct cross section (12),
5.3 a duct section length (13) of 300 to 1000 millimeters,
5.4 a mean duct cross section (12) of 0.2 to 10 square millimeters,
5.5 differently curved profile regions (10),
5.6 a plurality of curved profile regions (10) with a curvature of at least 90°,
5.7 an arrangement in an evaporator plane (14) of the basic body (2),
5.8 a duct wall (15) which has aluminum,
5.9 a duct wall (15) which has titanium,
5.10 a duct wall (15) having a mean roughness depth Rz in the range from 2 micrometers to 50 micrometers,
5.11 a hydrolytically active duct wall (15); and
5.12 profile regions (10) with a constriction (47) of a duct cross section (12).

4. Evaporator device (1) according to one of the preceding patent claims, in which the at least one duct (6) forms, between the at least one inlet line (3) and the evaporation section (7), an inflow section (16) which is arranged offset with respect to the evaporation section (7).

5. Evaporator device (1) according to Patent Claim 4, in which the at least one duct (6) has, in the inflow section (16), at least one of the following features:
7.1 a position offset with respect to an evaporator plane (14) of the basic body (2),
7.2 a mean duct cross section (12) of 0.2 to 30 square millimeters,
7.3 a cooling device (17),
7.4 a galvanic deposition (18).

6. Evaporator device (1) according to one of the preceding patent claims, in which the at least one duct (6) forms, between the evaporation section (7) and the at least one outlet line (4), an outflow section (19) which comprises a widening (20) of the duct cross section (12).

7. Evaporator device (1) according to Patent Claim 6, in which the at least one duct (6) has, in the outflow section (19), at least one of the following features:
9.1 at least one hydrolytically active reactor chamber (21),
9.2 at least one honeycomb body (22), which, with sheet-metal foils (23, 24) which have aluminum, forms a plurality of flow paths (25),
9.3 a widening (20) in the form of a cone between the evaporation section (7) and a hydrolytically active reactor chamber (21),
9.4 thermal insulation (26) with respect to the at least one heating element (5).

8. Evaporator device (1) according to one of the preceding patent claims, in which the basic body (2) has at least one of the following features:
10.1 formed with aluminum as a material,
10.2 a two-part design with a central evaporator plane (14),
10.3 a cohesive connection is present between the pipe (42) and the basic body (2) and the at least one heating element (5),
10.4 the inflow section (16) of the at least one duct (6) is formed into only a first part (28) of a two-part basic body (2),
10.5 a multiplicity of receptacles (30) for in each case at least one heating element (5).

9. Evaporator device (1) according to one of the preceding patent claims, in which the at least one inlet line (3) is connected to a pump (31) and has an inflexible line cross section (32).

10. Evaporator device (1) according to one of the preceding patent claims, in which the at least one outlet line (4) can be connected to an exhaust-gas line (33) and has a perforated end region (34).

11. Motor vehicle (35) having a drive (36) which produces exhaust gases and having at least one exhaust-gas line (33), with at least one evaporator device (1) according to one of the preceding patent claims being provided, the inlet line (3) of which evaporator device (1) interacts with a reservoir (37) and a fluid conveyor (38), and the outlet line (4) of which evaporator device (10) projects into the exhaust-gas line (33) .

12. Method for producing an evaporator device (1) comprising a basic body (2) with at least one inlet line (3) and at least one outlet line (4), in which basic body (2) is provided at least one heating element (5) and at least one duct (6) for connecting the inlet line (3) to the outlet line (4), with the at least one heating element (5) being in heat-conducting contact with an evaporation section (7) of the at least one duct (6), in which at least a part of the evaporation section (7) is formed from at least one pipe, with the at least one pipe composed of a material comprising at least one of the following substances:
a) aluminum;
b) titanium; and
c) steel
being encapsulated with a casting material (48).

13. Method according to Patent Claim 12, in which the material from which the at least one pipe is formed has a higher melting point than the casting material (48).

14. Method according to Patent Claim 12 or 13, in which the casting material (48) comprises aluminum.

15. Method according to one of Patent Claims 12 to 14, in which a fluid flows through the pipe (42) as the latter is being encapsulated.

16. Method according to Patent Claim 15, in which the fluid comprises at least one of the following substances:
A) air;
B) an inert gas;
C) oxygen (O₂);
D) nitrogen (N₂); and
E) a gas obtained from the evaporation of a liquefied gas.

## Revendications

1. Dispositif évaporateur (1), comprenant un corps de base (2) avec au moins une conduite d'alimentation (3) et au moins une conduite d'évacuation (4), dans lequel est prévu au moins un élément chauffant (5) et au moins un conduit (6) pour raccorder la conduite d'alimentation (3) à la conduite d'évacuation (4), l'au moins un élément chauffant (5) étant en contact thermoconducteur avec une portion d'évaporation (7) de l'au moins un conduit (6) et l'au moins un conduit (6) présentant dans cette portion d'évaporation (7) une allure en forme de méandres (8), au moins la portion d'évaporation (7) de l'au moins un conduit (6) comprenant au moins en partie au moins un tube, le tube étant intégré dans le corps de base de telle sorte que le tube soit raccordé par liaison de matière au corps de base (2).

2. Dispositif évaporateur (1) selon la revendication 1, dans lequel le tube est réalisé à partir d'un matériau comprenant au moins l'une des matières suivantes :
a) de l'acier ;
b) de l'aluminium ; et
c) du titane.

3. Dispositif évaporateur (1) selon l'une quelconque des revendications précédentes, dans lequel l'au moins un conduit (6) dans la portion d'évaporation (7) présente au moins l'une des caractéristiques suivantes :
5.1 une alternance de plusieurs régions d'étendue droites (9) et de plusieurs régions d'étendue courbe (10),
5.2 des régions d'étendue courbes (10) avec un élargissement (11) d'une section transversale de conduit (12),
5.3 une longueur de portion de conduit (13) de 300 à 1000 mm,
5.4 une section transversale de conduit centrale (12) de 0,2 à 10 millimètres carrés,
5.5 des régions d'étendue de courbures différentes (10),
5.6 plusieurs régions d'étendue courbes (10) ayant une courbure d'au moins 90°,
5.7 un agencement dans un plan d'évaporateur (14) du corps de base (2),
5.8 une paroi de conduit (15) présentant de l'aluminium,
5.9 une paroi de conduit (15) présentant du titane,
5.10 une paroi de conduit (15) avec une profondeur de rugosité moyenne Rz dans une plage de 2 µm à 50 µm,
5.11 une paroi de conduit (15) hydrolytiquement active ; et
5.12 des régions d'étendue (10) ayant un rétrécissement (47) d'une section transversale de conduit (12).

4. Dispositif évaporateur (1) selon l'une quelconque des revendications précédentes, dans lequel l'au moins un conduit (6) forme, entre l'au moins une conduite d'alimentation (3) et la portion d'évaporation (7), une portion d'entrée (16) qui est disposée de manière décalée par rapport à la portion d'évaporation (7).

5. Dispositif évaporateur (1) selon la revendication 4, dans lequel l'au moins un conduit (6) présente, dans la portion d'entrée (16), au moins l'une des caractéristiques suivantes :
7.1 une position décalée par rapport à un plan d'évaporateur (14) du corps de base (2),
7.2 une section transversale de conduit centrale (12) de 0,2 à 30 millimètres carrés,
7.3 un dispositif de refroidissement (17),
7.4 une séparation galvanique (18).

6. Dispositif évaporateur (1) selon l'une quelconque des revendications précédentes, dans lequel l'au moins un conduit (6) forme entre la portion d'évaporation (7) et l'au moins une conduite d'évacuation (4) une portion de sortie (19) qui comprend un élargissement (20) de la section transversale de conduit (12).

7. Dispositif évaporateur (1) selon la revendication 6, dans lequel l'au moins un conduit (6) dans la portion de sortie (19) présente au moins l'une des caractéristiques suivantes :
9.1 au moins un espace de réacteur hydrolytiquement actif (21),
9.2 au moins un corps en nid d'abeilles (22) qui forme, avec des feuilles en tôle (23, 24) présentant de l'aluminium, une pluralité de chemins d'écoulement (25),
9.3 un élargissement (20) en forme de cône entre la portion d'évaporation (7) et un espace de réacteur hydrolytiquement actif (21),
9.4 une isolation thermique (26) par rapport à l'au moins un élément chauffant (5).

8. Dispositif évaporateur (1) selon l'une quelconque des revendications précédentes, dans lequel le corps de base (2) présente au moins l'une des caractéristiques suivantes :
10.1 il est formé avec de l'aluminium en tant que matériau,
10.2 il présente une structure en deux parties avec un plan d'évaporateur central (14),
10.3 il est prévu une liaison de matière entre le tube (42) et le corps de base (2) et l'au moins un élément chauffant (5),
10.4 la portion d'entrée (16) de l'au moins un conduit (6) est introduite seulement dans une première partie (28) d'un corps de base en deux parties (2),
10.5 une pluralité de logements (30) sont prévus à chaque fois pour au moins un élément chauffant (5).

9. Dispositif évaporateur (1) selon l'une quelconque des revendications précédentes, dans lequel l'au moins une conduite d'alimentation (3) est raccordée à une pompe (31) et présente une section transversale de conduite non flexible (32).

10. Dispositif évaporateur (1) selon l'une quelconque des revendications précédentes, dans lequel l'au moins une conduite d'évacuation (4) peut être raccordée à une conduite de gaz d'échappement (33) et présente une région d'extrémité perforée (34).

11. Véhicule automobile (35) présentant un entraînement (36) produisant des gaz d'échappement et au moins une conduite de gaz d'échappement (33), au moins un dispositif évaporateur (1) selon l'une quelconque des revendications précédentes étant prévu, dont la conduite d'alimentation (3) coopère avec un réservoir (37) et un dispositif de transport de fluide (38) et dont la conduite d'évacuation (4) pénètre dans la conduite de gaz d'échappement (33).

12. Procédé de fabrication d'un dispositif évaporateur (1), comprenant un corps de base (2) avec au moins une conduite d'alimentation (3) et au moins une conduite d'évacuation (4), dans laquelle sont prévus au moins un élément chauffant (5) et au moins un conduit (6) pour relier la conduite d'alimentation (3) à la conduite d'évacuation (4), l'au moins un élément chauffant (5) étant en contact thermoconducteur avec une portion d'évaporation (7) de l'au moins un conduit (6), au moins une partie de la portion d'évaporation (7) étant réalisée à partir d'au moins un tube, l'au moins un tube étant coulé à partir d'un matériau comprenant au moins l'une des matières suivantes :
a) aluminium ;
b) titane ; et
c) acier
avec un matériau de coulée (48).

13. Procédé selon la revendication 12, dans lequel le matériau constituant l'au moins un tube présente un point de fusion plus élevé que le matériau de coulée (48).

14. Procédé selon la revendication 12 ou 13, dans lequel le matériau de coulée (48) comprend de l'aluminium.

15. Procédé selon l'une quelconque des revendications 12 à 14, dans lequel le tube (42) est parcouru par un fluide pendant sa coulée.

16. Procédé selon la revendication 15, dans lequel le fluide comprend au moins l'une des matières suivantes :
A) de l'air ;
B) un gaz inerte ;
C) de l'oxygène (O₂) ;
D) de l'azote (N₂) ; et
E) un gaz obtenu à partir de l'évaporation d'un gaz liquéfié.
